# EUROPÄISCHE PATENTSCHRIFT

(11) **EP 1 657 474 B1**
(45) Veröffentlichungstag und Bekanntmachung des Hinweises auf die Patenterteilung: **31.10.2007**
(21) Anmeldenummer: 04026660.3
(22) Anmeldetag: 10.11.2004
(51) Int. Cl.: F16H 48/06

(54) **Differentialgetriebe**
Differential
Différentiel

(43) Veröffentlichungstag der Anmeldung: 17.05.2006
(73) Patentinhaber: Viking GmbH, 6336 Langkampfen-Kufstein (AT)
(72) Erfinder: Huber, Reinhold, A-6111 Volders (AT)
(74) Vertreter: Riedel, Peter

(56) Entgegenhaltungen:
- GB-A- 234 909
- GB-A- 1 218 088
- US-A- 1 366 805
- US-A- 1 522 730
- US-A- 1 839 195
- US-A- 2 481 066
- US-A- 2 547 401
- US-A- 4 373 407
- US-A- 5 971 122

## Beschreibung

Die Erfindung betrifft ein Differentialgetriebe zur Übertragung eines Antriebsdrehmoments auf koaxial und getrennt angeordneten Abtriebswellen eines Fahrzeugs, insbesondere eines fahrbaren Rasenmähers, der im Oberbegriff des Patentanspruchs 1 angegebenen Gattung.

Zum Antrieb der Räder eines motorgetriebenen Fahrzeugs ist das Antriebsdrehmoment auf die Antriebswelle mindestens eines Rades zu übertragen. Bei Rasenmähern sind die Räder auf koaxial und getrennt angeordneten Abtriebswellen angeordnet, wodurch ermöglicht werden soll, daß in Kurvenfahrten die Räder mit unterschiedlichen Drehzahlen laufen können. Aus der DE 29 50 459 ist ein Rasenmäher mit getrennten Abtriebswellen bekannt, bei dem der Antrieb über einen Riementrieb erfolgt, welcher einerseits von der Motorwelle angetrieben ist und zum Abtrieb über eine Abtriebsscheibe läuft. Die Abtriebsscheibe ist im Durchmesser variabel einstellbar, um eine stufenlose Einstellbarkeit der Fahrtgeschwindigkeit zu gewährleisten. Die Abtriebsscheibe ist aus zwei Scheibenbacken gebildet, wobei jede der koaxial und getrennt liegenden Abtriebswellen der Räder eine der zusammenwirkenden Scheibenbacken trägt. Bei dem bekannten Rasenmäher wird auch bei Kurvenfahrt jedes der Räder mit gleicher Drehzahl angetrieben, wodurch die Bedienperson des Rasenmähers mehr Kraft zum Lenken des Rasenmähers auf wenden muß.

Aus der US-A-1,366,805 ist ein Differentialgetriebe mit den Merkmalen des Oberbegriffs des Anspruchs 1 bekannt.

Der vorliegenden Erfindung liegt die Aufgabe zugrunde, ein Differentialgetriebe zur Übertragung des Drehmoments auf getrennte Abtriebswellen der gattungsgemäßen Art derart aus zubilden, daß mit einfachen baulichen Mitteln bei Kurvenfahrt ein Freilauf der außenliegenden Treibräder möglich ist.

Diese Aufgabe wird erfindungsgemäß mit den Merkmalen des Patentanspruchs 1 gelöst.

Das erfindungsgemäße Differentialgetriebe weist eine vom Motor angetriebene Antriebshülse auf, welche konzentrisch zu den Abtriebswellen angeordnet ist und die einander zugewandt liegenden Wellenzapfen der Abtriebswellen in sich aufnimmt und zum Antrieb mindestens ein radiales Kupplungselement auf die Abtriebswellen einwirkt. Um einen Freilauf der in Kurvenfahrt außenliegenden Abtriebswelle zu ermöglichen, sind die Kupplungselemente jeweils in radialen Ausnehmungen der Antriebshülse schwenkbeweglich zu beiden Seiten einer Radialachse aufgenommen und werden über Kontakt mit der jeweiligen Abtriebswelle entsprechend der Drehrichtung der Antriebshülse in kraftübertragende Stellung gekippt, in welcher ein in Drehrichtung vorlaufender Teil an der Abtriebswelle anliegt und ein nachlaufender Teil von der Abtriebswelle mit Abstand liegt. Dabei sind die Kupplungselemente beider Abtriebswellen hinsichtlich ihrer Kippbewegung paarweise gekoppelt, wodurch auch das Kupplungselement der schneller laufenden Abtriebswelle in Kippbewegung gebracht wird und die schneller laufende Abtriebswelle ungehindert durchlaufen kann. Mit der Beendigung der Kurvenfahrt sinkt die Drehzahl des schnell laufenden Außenrades und die Abtriebswelle wird von dem in Kippstellung befindlichen Kupplungselement kraftübertragend mitgenommen. Vorteilhaft sind die paarweise zusammenwirkenden Kupplungselemente der Abtriebswelle in axialer Überdeckung beidseitig einer Trennebene der Abtriebswellen angeordnet und können so mit geringem baulichen Aufwand miteinander kinematisch gekoppelt werden. Zweckmäßig sind mehrere Kupplungselemente am Umfang der Antriebshülse verteilt.

Das erfindungsgemäße Differentialgetriebe mit kippbeweglichen und gekoppelten Kupplungselementen kann mit reibschlüssiger oder formschlüssiger Kraftübertragung ausgestaltet sein. Bei einer formschlüssigen Kraftübertragung ist an der Abtriebswelle mindestens ein Nocken in axialer Lage des jeweiligen Kupplungselements vorgesehen, welcher um ein geringeres Maß aus der Abtriebswelle hervorsteht als der Umkreis des in gekippter Stellung in Drehrichtung hinten liegenden Teils des Kupplungselements. Der Nocken wirkt mit dem in Drehrichtung vorne liegenden Teil des radialen Kupplungselements zusammen und schiebt beim Anfahren der Antriebshülse das Kupplungselement in die Kippstellung, in der der vorne liegende Teil den Nocken und damit die Abtriebswelle formschlüssig mitnimmt.

In einer vorteilhaften Ausgestaltung eines formschlüssigen Differentialgetriebes ist der Nocken an den Enden eines verschieblich die Abtriebswelle durchsetzenden Bolzens gebildet, welcher mit einem Anschlag zur Begrenzung des Austritts der Abtriebswelle versehen ist. In Kurvenfahrt des Rasenmähers läuft der als Nocken aus der Welle austretende Bolzen unter dem in Drehrichtung hinten liegenden Abschnitt des Kupplungselementes in den vom Kupplungselement überdeckten Bereich ein und wird an der Oberfläche des gekippten Kupplungselements axial verschoben. Dabei wird der Nocken in die Abtriebswelle eingeschoben und ein wirkungsvoller Freilauf bereitgestellt. Auf der jeweils gegenüberliegenden Seite tritt der Nockenbolzen aus und wird seinerseits, sobald er das Kupplungselement erreicht, in die Abtriebswelle zurückgeschoben, wodurch während der Kurvenfahrt ein Freilauf des schneller drehenden Rades erfolgt, während der Nockenbolzen der währenddessen ständig zwangsgetriebenen Abtriebswelle in Anlage an dem jeweils anderen Kupplungselement des Kupplungspaares anliegt. Bei der Ausgestaltung des Getriebes mit verschieblichen Bolzen können die Kupplungselemente eines Paares vorteilhaft einteilig ausgebildet werden.

Sind paarweise gekoppelte, formschlüssige Kupplungselemente als getrennte Bauteile vorgesehen, so können die Kupplungselemente in Bezug auf ihre Schwenkbewegung zweckmäßig durch einen zwischen den Bauteilen wirkenden Zentriermechanismus, vorteilhaft durch eine an beiden Kupplungselementen angreifende Rückholfeder, kinematisch gekoppelt werden, wodurch in Kurvenfahrt der Nocken der schneller laufenden Abtriebswelle das jeweils zugeordnete Kupplungselement unterläuft und den in Drehrichtung vorne liegenden Teil hochschiebt und durchläuft. Nachdem der Nocken die vom Kupplungselement überdeckte Drehwinkellage verlassen hat, drängt der Zentriermechanismus das Kupplungselement in die Arbeitslage zurück.

Eine Zentrierung der Kupplungselemente auf der Radialachse kann durch Federelemente erfolgen, welche sich an der Antriebshülse abstützen und die Kupplungselemente jeweils radial beaufschlagen.

Besonders vorteilhaft werden die Kupplungselemente als Wippe mit zwei gespreizten Schenkeln ausgebildet, welche an ihren Schenkelenden eine mit der Nockenform korrespondierende Kontaktfläche tragen. Die Wippenschenkel überdecken einen vergrößerten Umfangsabschnitt der Abtriebswelle und können mit optimalem Kraftfluß an die Nocken angelegt werden. Insbesondere kann der zwischen den Wippenschenkeln aufgespannte Wandabschnitt der Wippe wenigstens an den Enden als schräge oder gebogene Gleitrampe ausgebildet werden, an denen in Kurvenfahrt der schnellaufende Nocken anliegt und die Wippe mit vernachlässigbar kleiner Bremswirkung aufdrängt.

In einer alternativen Ausgestaltung erfolgt die Kraftübertragung auf die Abtriebswellen reibschlüssig, wobei jedes radiale Kupplungselement mit seinem freien Ende reibschlüssig mit der Oberfläche der Abtriebswelle zusammenwirkt und von einem Federelement radial beaufschlagt wird. Die schwenkbewegliche Lagerung der Kupplungselemente wird dabei mit radialem Spiel derart abgestimmt, daß die in Drehrichtung vorne liegenden Abschnitte der Kontaktflächen in Kippstellung innerhalb des Reibungswinkels entsprechend der gewählten Materialpaarung liegen. In Kurvenfahrt läuft die außenliegende, schneller drehende Abtriebswelle auf der in Drehrichtung hinten liegenden Seite des gekippten Kupplungselementes ein, wobei keine Kraftübertragung zwischen Kupplungselement und Welle erfolgt. Zur Koppelung der Kippbewegung aller Kupplungselemente ist vorteilhaft ein Synchronring vorgesehen, welcher jeweils die Wellenzapfen beider Abtriebswellen aufnimmt und am Umfang mit Ausnehmungen versehen ist, in denen die Kupplungselemente geführt sind. Auf diese Weise ist sichergestellt, daß alle Kupplungselemente gleichzeitig gekippt werden und in Kurvenfahrt die Kupplungselemente der schneller laufenden Abtriebswelle gegen die Bewegung der Welle in Schrägstellung gehalten werden.

Eine vorteilhafte Ausgestaltung der reibschlüssigen Kraftübertragung ohne Synchronring ist möglich, wenn viele Kupplungselemente angeordnet sind, welche an der Antriebswelle in Umfangsrichtung aneinander liegen und somit alle gleich ausschwenken. Die Schwenkbewegung zum jeweils paarweise gegenüberliegenden Kupplungselement ist dann wiederum, vorteilhaft mit geringem Winkelspiel, kinematisch gekoppelt, so daß eine Seite drehmomentfrei durchlaufen kann.

Alle Varianten haben die gemeinsame Wirkungsweise, daß sie erstens bei Vor- und Rückwärtsfahrt arbeiten können und daß sie zweitens auch für den umgekehrten Kraftfluß (Schiebebetrieb) geeignet sind, wobei in diesem Fall die schnellere Abtriebswelle die Auslenkung der/des Kupplungselemente(s) bewirkt und die langsamere nicht zum Eingriff kommt.

Das System ist wegen dieser Eigenschaften auch nicht auf Differentiale für Kurvenfahrt beschränkt, sondern auch als Zwischenachsdifferenzial für Allradfahrzeuge geeignet.

Ausführungsbeispiele der Erfindung sind nachstehend anhand der Zeichnung näher erläutert. Es zeigen:
- Fig. 1 und Fig. 2: einen Querschnitt und eine perspektivische Ansicht eines Differentials in Stillstellung,
- Fig. 3 und Fig. 4: einen Querschnitt und eine perspektivische Darstellung eines Differentials in Arbeitsstellung,
- Fig. 5: einen Querschnitt durch eine Abtriebseinheit für die Räder eines Rasenmähers,
- Fig. 6: einen Querschnitt durch eine Antriebshülse der Abtriebseinheit,
- Fig. 7: eine alternative Ausgestaltung eines formschlüssigen Differentialgetriebes,
- Fig. 8: als Einzelheit die Abtriebswelle der Anordnung nach Fig. 7 in Arbeitsstellung,
- Fig. 9: einen Querschnitt einer reibschlüssig übertragenden Ausführung eines Differentialgetriebes,
- Fig. 10: eine einzelne Darstellung der Abtriebswelle des reibschlüssigen Differentialgetriebes in Arbeitsstellung,
- Fig. 11: eine perspektivische Ansicht eines Synchronrings für das Differentialgetriebe nach Fig. 9,
- Fig. 12: einen Querschnitt einer reibschlüssig übertragenden Ausführung eines Differentialgetriebes ohne Synchronring.

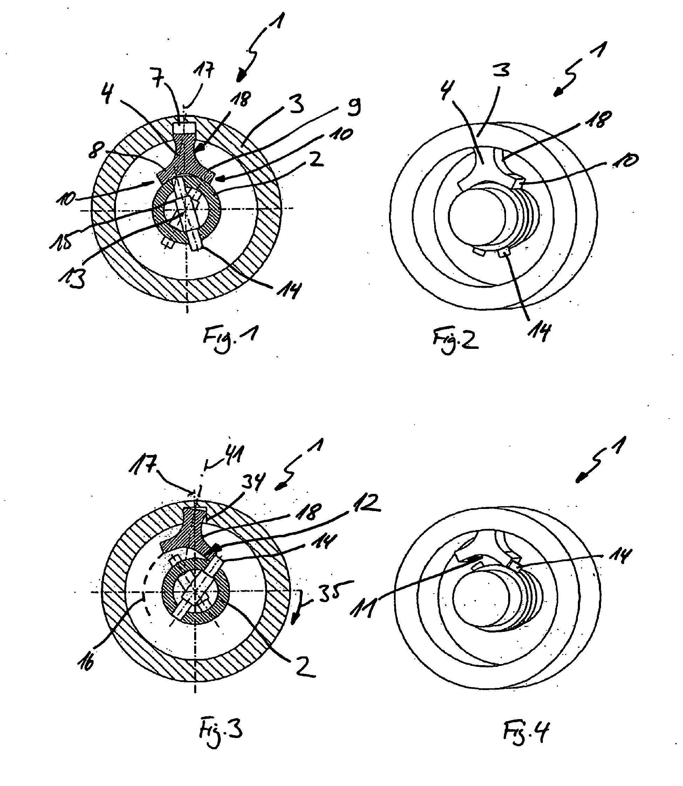

Die Fig. 1 bis 4 zeigen eine Anordnung zur Übertragung von Drehmomenten von einer treibenden Antriebshülse auf eine Abtriebswelle, wie sie in der Ausführung einer Abtriebseinheit 42 eines Rasenmähers gemäß Fig. 5 und Fig.6 vorgesehen ist. Bei einem Fahrzeug wie einem Rasenmäher werden die Räder 39 von dem Motor angetrieben, welcher auch auf das Messerblatt wirkt. Die Abtriebseinheit 42 für die Räder 39 weist koaxial und getrennt zueinander angeordnete Abtriebswellen 2, 2' auf, die die eigentlichen, nicht dargestellten Halbwellen und damit die Räder 39 antreiben. Gegebenenfalls kann vor oder im Rad noch eine weitere Übersetzungsstufe angeordnet sein. Die Abtriebseinheit 42 ist mit einer Riemenscheibe 29 ausgestattet, welche über einen V-förmigen Treibriemen von dem nicht dargestellten Motor angetrieben wird. Die Riemenscheibe 29 weist zwei Scheibenbacken 30, 31 auf, welche einen V-förmigen Querschnitt zur Aufnahme des Treibriemens ausbilden und von dem eine Scheibenbacke 31 axial fest und die andere Scheibenbacke 30 axial verschieblich ist. Über die axiale Lage der variabel einstellbaren Scheibenbacke 30 kann die Drehzahl der Riemenscheibe und damit die Fahrtgeschwindigkeit des Rasenmähers stufenlos eingestellt werden. Auf die variable Scheibenbacke 30 wirkt ein Federelement 38 und hält den Treibriemen in der Varioscheibe 29 unter Betriebsspannung. In einem Gehäuse 28 ist die Abtriebseinheit 42 über die Lager 32 gelagert und im Inneren der Einheit sind die beiden Abtriebswellen 2, 2' unabhängig voneinander drehbar. Die Abtriebsscheibe 29 des Riementriebes ist konzentrisch zu den Abtriebswellen 2, 2' angeordnet und ist drehfest mit einer Antriebshülse 3 verbunden, welche in ihrem Inneren die Wellenzapfen 40, 40' der Abtriebswellen 2, 2' aufnimmt. Die Übertragung des Drehmomentes von der Riemenscheibe 29 bzw. der Antriebshülse 3 auf die Abtriebswellen erfolgt über Kupplungselemente welche sich - wie Fig. 6 in einem Schnitt durch die Antriebshülse 3 zeigt - radial zwischen der Antriebshülse 3 und den konzentrisch liegenden Abtriebswellen 2, 2' erstrecken. Die Kupplungselemente 4 sind schwenkbeweglich in radialen Ausnehmungen der Antriebshülse 3 aufgenommen, welche von einer an die Varioscheibe 29 anschließenden Verschlußplatte 37 abgedeckt sind. Eine an der Verschlußplatte 37 abgestützte Radialfeder 33 zentriert das Kupplungselement 34 in dem Zwischenraum der Antriebshülse 3 und der Abtriebswelle 2. Die Kupplungselemente beider Wellen sind paarweise angeordnet und kinematisch miteinander gekoppelt, so daß jedes Kupplungselement eines Paares der Schwenkbewegung des anderen folgt. Im vorliegenden Ausführungsbeispiel sind die Kupplungselemente eines Paares einteilig ausgeführt und dadurch aneinander gekoppelt. Die Kupplungselemente 4 können in unten näher beschriebener Weise die Abtriebswelle 2 mitnehmen, wodurch die gezeigte Anordnung mit Antriebshülse 3, zentralen Abtriebswellen 2 und den Kupplungselementen 4 ein Differentialgetriebe bilden.

Fig. 1 und 2 zeigen das Differentialgetriebe 1 in Stillstellung der Antriebshülse 3. Das Kupplungselement 4 ist im vorliegenden Ausführungsbeispiel als Wippe mit zwei gespreizten Wippenschenkeln 8, 9 ausgebildet und mit seinem Schaft in einer radialen Ausnehmungen 7 der Antriebshülse 3 aufgenommen. Der Schaft ist dabei schwenkbeweglich zu einer Radialachse 17 gelagert und wird in Drehrichtung der Antriebshülse mitgenommen. Die Seitenflächen 18 des Schaftes sind einwärts gekrümmt ausgebildet und gestatten eine Kippbewegung der Wippe 4. Die Wippenschenkel 8, 9 reichen bis an die zentralen Abtriebswellen 2, 2' heran und tragen an ihren freien Enden jeweils einen Kontaktabschnitt, welcher mit einem Nocken 14 an der Abtriebswelle 2 zusammenwirkt. Sobald die Antriebshülse 3 in Bewegung gesetzt wird, läuft die Kupplungswippe 4 mit um und erreicht den aus der Oberfläche der Abtriebswelle 2 hervorstehenden Nocken 14. Die Kupplungswippe 4 ist etwa auf Höhe einer Trennebene der koaxialen Abtriebswellen 2, 2' angeordnet und überdeckt als einteiliges Bauteil beide Wellenzapfen der Abtriebswellen 2, 2'. Getrieben von der Drehbewegung der Antriebshülse 3 nimmt die Kupplungswippe 4 den Nocken 14 und damit die jeweilige Abtriebswelle 2 mit. Die Nocken 14 sind im vorliegenden Ausführungsbeispiel an den Enden vom Bolzen 13 ausgebildet, welche die Abtriebwellen 2 axial verschieblich durchdringen. Die ausschiebbaren Nockenzapfen 14 sind in Führungen der hohl ausgebildeten Abtriebswelle 2 axial verschieblich gelagert, wobei der Ausschiebeweg der Bolzen durch einen Anschlag 15 in Gestalt einer radialen Schulter begrenzt ist. Durch den Anschlag 15 ist gewährleistet, daß der Bolzen jeweils nur an einer Seite der Abtriebswelle ausgeschoben ist und einen Nocken 14 ausbildet.

Fig. 3 und 4 zeigen das Differentialgetriebe 1 in Arbeitsstellung, wobei die in Drehrichtung 35 umlaufende Antriebshülse 3 die Kupplungswippe 4 mit ihrem in Drehrichtung 35 vorne liegenden Schenkel in Anlage an den Nocken 14 bringt, wobei der Schaft kippt. Die Lagerung des Schaftes der Kupplungswippe in der radialen Ausnehmungen 7 der Antriebshülse 3 ist dabei mit einem radialen Spiel ausgestaltet, wodurch die Kupplungswippe in Kippstellung in der radialen Ausnehmung 7 nach außen rutscht, sich schräg stellt und damit Drehmoment übertragen kann. Das radiale Spiel zwischen den Seitenflächen 18 der Kupplungswippe und der Bohrungswand 34 der radialen Ausnehmung 7 sowie die Geometrie der Kupplungswippe sind so abgestimmt, daß sich ein Kippwinkel in Arbeitsstellung ergibt, welcher den in Drehrichtung vorlaufende Wippenschenkel an dem Zapfen 14 zur Anlage bringt und das nachlaufende Ende auf einem Umkreis 36 legt, der außerhalb des vom Zapfen bestreichbaren Umkreises liegt.

Der zwischen den Wippenschenkeln aufgespannte Wandbereich der Kupplungswippe, welcher der Abtriebswelle 2 zugewandt liegt, ist bogenförmig ausgestaltet und bildet im Bereich der Kontaktflächen eine Gleitrampe 12 aus. Wird bei einer Kurvenfahrt des Rasenmähers das außenliegende Rad und damit dessen Abtriebswelle 2 mit einer höheren Drehzahl bewegt, so wird der Bolzen der schneller laufenden Abtriebswelle vorlaufen und schließlich in den Bereich unter dem Kupplungselement einlaufen, welcher zwischen der Kupplungswippe und der Oberfläche der Abtriebswelle 2 gebildet ist. Der Nocken der vorlaufenden Abtriebswelle wird an der Gleitrampe 12 zur Anlage kommen und von den Wippenschenkeln in das Innere der Abtriebswelle 2 gedrückt, wodurch die Abtriebswelle mit schnellerer Drehzahl weiterlaufen kann, während die Abtriebswelle 2 des innenliegenden Rades weiter formschlüssig angetrieben wird. Auf diese Weise ist in beiden möglichen Drehrichtungen ein Freilauf des äußeren Rades bei Kurvenfahrten gewährleistet. Ähnlich der Anordnung der Feder 33 in Fig.6 stellt eine Radialfeder das Kupplungselement wieder gerade, sobald kein Drehmoment mehr übertragen wird.

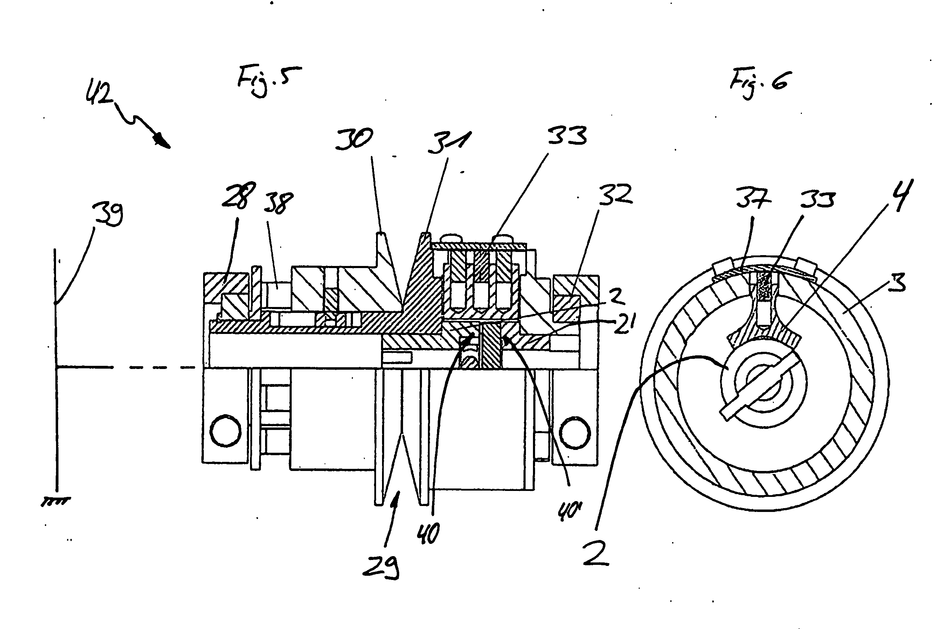

Die Fig. 7 und 8 zeigen eine alternative Ausgestaltung eines formschlüssigen Differentialgetriebes, bei dem die Nocken fest an der Antriebswelle 3 ausgebildet sind, nämlich durch Ausnehmungen 21 in der Wellenoberfläche. In der Antriebshülse 3 sind mehrere Kupplungswippen 5 in radialen Ausnehmungen 7 aufgenommen, deren Bügelschenkel 8, 9 alternativ entsprechend der Drehrichtung der Antriebshülse mit den Nocken in formschlüssige Verbindung bringbar sind. Die Kupplungswippen 5 sind im Ausführungsbeispiel wieder durch entsprechende Formgebung an ihrem hinteren Ende 19 schwenkbeweglich in der Antriebshülse 3 aufgenommen und werden wie oben beschrieben von einer Radialfeder 23 an der Abtriebswelle 2 zentriert. Das Differentialgetriebe weist mehrere Kupplungswippen 5, im Ausführungsbeispiel drei Kupplungswippen 5, auf, mit denen eine gleichmäßigere Kraftübertragung erfolgen kann. Die Kupplungswippen 5 sind jeweils paarweise den Abtriebswellen zugeordnet, wobei die Kupplungswippen 5, 5' einer Doppelwippe jeweils durch einen zwischen den Wippen wirkenden Zentriermechanismus, hier eine in Umfangsrichtung wirkende Rückholfeder 22, kinematisch gekoppelt sind. Die Drehmomentübertragung erfolgt durch Eingriff des in Drehrichtung vorlaufenden Wippenschenkels in den vom Nocken 14 ausgebildeten Widerstand, wodurch die Kupplungswippe 5 in Kippstellung gebracht wird und in Kippstellung weiter von der Antriebshülse 3 zwangsgetrieben wird. Bei Geradeausfahrt des Rasenmähers befinden sich beide Kupplungswippen 5, 5' einer Doppelwippe 20 in Eingriff mit der jeweils zugeordneten Abtriebswelle 2, wodurch beide Räder mit der gleichen Antriebsdrehzahl laufen. Bei Kurvenfahrt wird eine unterschiedliche Drehzahl der Abtriebswellen gewährleistet durch einen Freilauf der schnell laufenden Welle des außenliegenden Rades, indem die Nocken 14 der schnell laufenden Abtriebswelle die innenliegende Seite des in Drehrichtung vorlaufenden Wippenschenkels erreichen und diesen gegen den Zentriermechanismus verdrängen. Dies ermöglicht den Freilauf der schnelleren Welle. Durch die Feder 22 wird die Kupplungswippe 5 der schnell laufenden Welle in die Arbeitsstellung zurückgeholt. Gegen Ende der Kurvenfahrt, wenn die Wellendrehzahlen sich einander annähern, wird die von der Feder 22 bereits in Kippstellung bewegte Kupplungswippe wieder in Eingriff mit dem jeweils eingeholten Nocken gebracht.

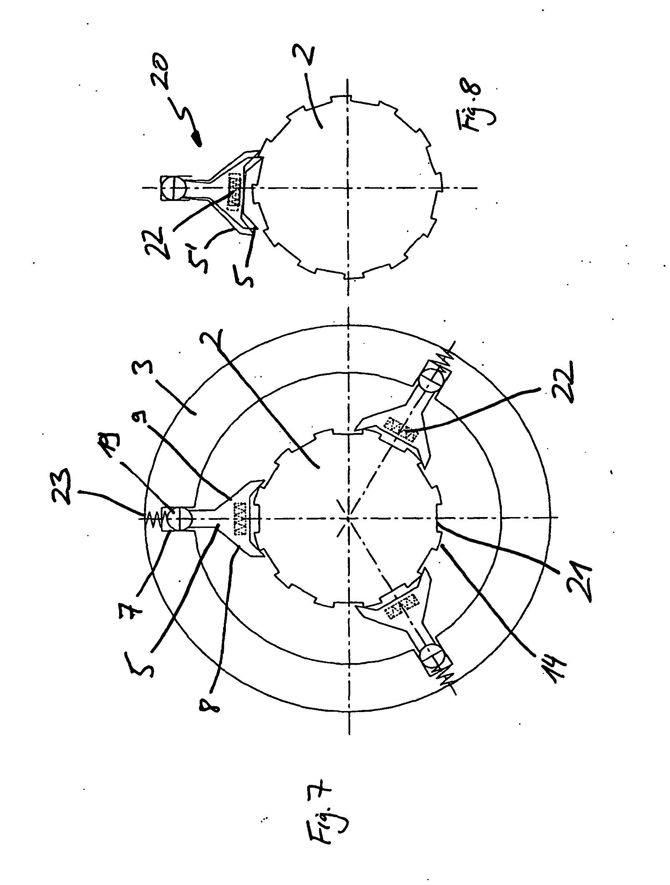

Fig. 9 zeigt ein Differentialgetriebe mit reibschlüssiger Kupplung der Abtriebswellen 2. Dabei sind in der Antriebshülse 3 mehrere radiale Keilelemente 6 schwenkbeweglich in Radialaufnahmen 7 gelagert und werden von Radialfedern 23 mit ihren freien Enden 24 an die Oberflächen der Abtriebswellen 2 gedrückt. Jeder Abtriebswelle ist dabei ein Kranz mit mehreren Keilelementen 6 zugeordnet. Die Keilelemente 6 sind in den radialen Ausnehmungen der Antriebshülse mit radialem Spiel aufgenommen und werden dadurch von der Relativverschiebung der Antriebshülse und der Abtriebswelle in gekippte Arbeitsstellung gebracht. Das radiale Spiel und damit die Schrägstellung der Kupplungskeile 6 ist mit dem Reibungswinkel entsprechend der Reibungskoeffizienten der Materialpaarung zwischen Kupplungselement und der Oberfläche der Abtriebswelle 2 abzustimmen.

Die Kupplungskeile 6 der einen Abtriebswelle 2 sind mit den Kupplungskeilen 6 der jeweils anderen Abtriebswelle durch einen in Fig. 11 dargestellten Synchronring 25 miteinander gekoppelt. Der Synchronring 25 wird auf beide einander zugewandt liegenden Wellenzapfen der Abtriebswellen aufgeschoben und weist einen zentralen Radialsteg 27 auf, welcher in Einbaulage des Synchronrings 25 etwa auf Höhe der Trennebene der Abtriebswellen liegt. Zu beiden Stirnseiten des Steges 27 ist ein Ringmantel ausgebildet, in dem Ausnehmungen 26 zur Zuführung der Kupplungselemente 6 vorgesehen sind. Die Ausnehmungen 26 sind dabei mit geringem Spiel in Umfangsrichtung des Synchronrings 25 vorgesehen, um die Kippbeweglichkeit der Kupplungselemente 6 zu gewährleisten.

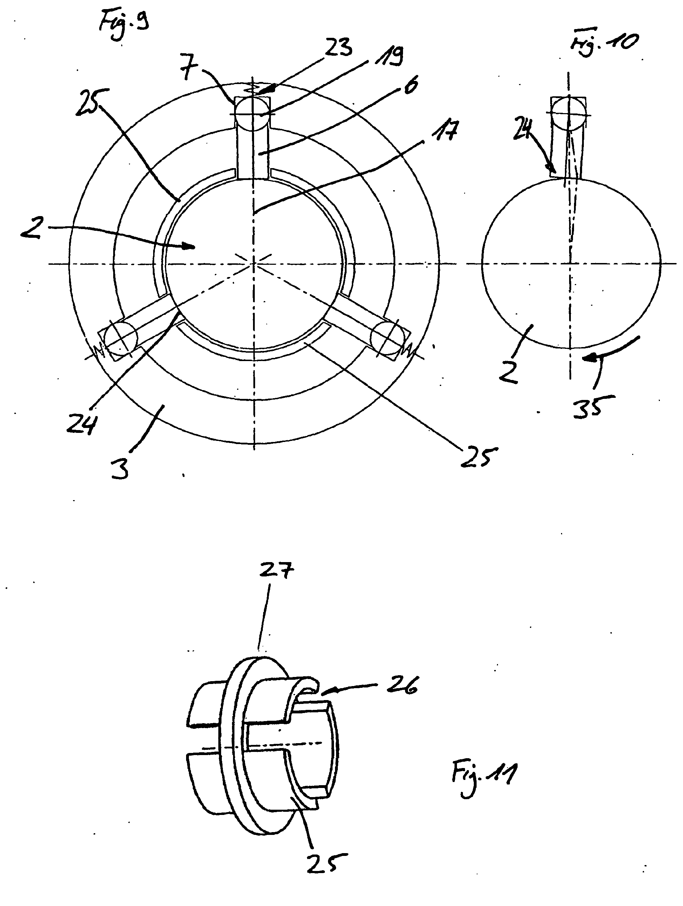

Werden die stabförmigen Kupplungsteile 6 in die in Fig. 10 gezeigte Arbeitsstellung gekippt, so wird über die freien Enden 24 der Kupplungskeile reibschlüssig ein Drehmoment auf die Abtriebswelle 2 übertragen. In Kurvenfahrt werden die Kupplungskeile einer Seite durch das zu übertragende Drehmoment schräggestellt und somit über den Synchronring 25 zwangsweise und in gleiche Richtung auch die Kupplungskeile der schnelleren Welle. Dadurch kann auf der schnelleren Seite keine Reibkraft aufgebaut werden, was den Freilauf der schnell laufenden Welle ermöglicht.

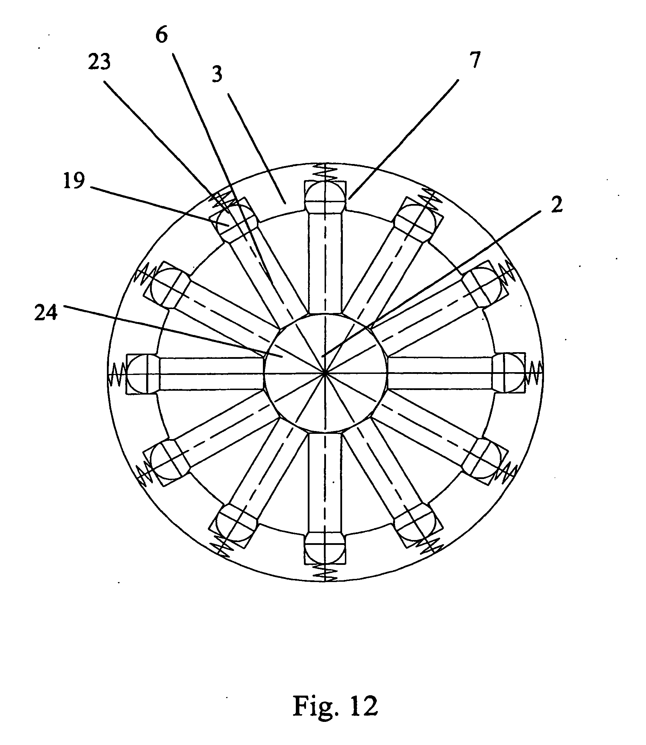

Fig. 12 zeigt eine Anordnung mit reibschlüssiger Kraftübertragung, bei der eine Kopplung der Kippbewegung der Kupplungselemente ohne Synchronring erfolgt. Dabei ist eine Vielzahl von Kupplungskeilen 6 am Umfang der Antriebshülse 3 vorgesehen, welche an ihren freien Enden 24 in Umfangsrichtung der Abtriebswelle 2 aneinander liegen. Dabei ist jeder stabförmige Kupplungskeil 6 ähnlich der oben beschriebenen Anordnung gemäß Fig. 10 und Fig.11 in radialen Ausnehmungen 7 der Antriebshülse 3 schwenkbeweglich gelagert und jeweils von einer Radialfeder 23 zentriert. Die schwenkbewegliche Lagerung der Kupplungskeile erfolgt im vorliegenden Ausführungsbeispiel mittels zylindrischen Schwenklagern 19.

## Patentansprüche

1. Differentialgetriebe zur Übertragung eines Antriebsdrehmoments auf koaxial und getrennt angeordnete Abtriebswellen (2, 2') eines Fahrzeugs, insbesondere eines fahrbaren Rasenmähers, mit einer konzentrisch zu den Abtriebswellen (2, 2') angeordneten Antriebshülse (3), welche die einander zugewandt liegenden Wellenzapfen (40, 40') der Abtriebswellen (2, 2') axial überdeckt, und mit pro Abtriebswelle (2, 2') mindestens einem radialen Kupplungselement (4, 5, 6, 20), welches über Kontakt mit der jeweiligen Abtriebswelle (2, 2') entsprechend der Drehrichtung (35) der Antriebshülse (3) in kraftübertragende Stellung kippbar ist,
**dadurch gekennzeichnet, daß** das pro Antriebswelle (2, 2') mindestens eine radiale Kupplungselement (4, 5, 6, 20) jeweils in einer radialen Ausnehmung (7) der Antriebshülse (3) schwenkbeweglich zu beiden Seiten einer Radialachse (17) aufgenommen ist, wobei die Kupplungselemente (4, 5, 6, 20) beider Abtriebswellen (2, 2') hinsichtlich ihrer Kippbewegung paarweise gekoppelt sind.

2. Differentialgetriebe nach Anspruch 1,
**dadurch gekennzeichnet, daß** die Kupplungselemente (4, 5, 6, 20) jedes Paars in axialer Überdeckung beidseitig einer Trennebene der Abtriebswellen (2, 2') angeordnet sind.

3. Differentialgetriebe nach Anspruch 1 oder 2,
**dadurch gekennzeichnet, daß** mehrere Kupplungselemente (4, 5, 6, 20) am Umfang der Antriebshülse (3) verteilt sind.

4. Differentialgetriebe nach einem der Ansprüche 1 bis 3,
**dadurch gekennzeichnet, daß** an der Abtriebswelle (2, 2') mindestens ein Nocken (14) in axialer Lage des Kupplungselementes (4, 5, 20) vorgesehen ist, welcher um ein geringeres Maß aus der Welle (2, 2') hervorsteht als der Umkreis (16) des in gekippter Stellung in Drehrichtung (35) hinten liegenden Teils des Kupplungselementes (4, 5, 20) und als Mitnehmer mit dem vorne liegenden Teil zusammenwirkt.

5. Differentialgetriebe nach Anspruch 4,
**dadurch gekennzeichnet, daß** die Kupplungselemente (5, 20) eines Paares durch einen zwischen den Paaren wirkenden Zentriermechanismus (22), vorteilhaft eine Rückholfeder (22), verbunden sind.

6. Differentialgetriebe nach einem der Ansprüche 1 bis 5,
**dadurch gekennzeichnet, daß** die Kupplungselemente (4, 5, 6, 20) von radialen Federelementen (23) beaufschlagt werden.

7. Differentialgetriebe nach einem der Ansprüche 4 bis 6,
**dadurch gekennzeichnet, daß** ein Nocken (14) an den Enden eines verschieblich die Abtriebswelle (2, 2') durchsetzenden Bolzens (13) gebildet ist, welcher mit einem Anschlag (15) zur Begrenzung des Austritts aus der Abtriebswelle (2, 2') versehen ist.

8. Differentialgetriebe nach Anspruch 7,
**dadurch gekennzeichnet, daß** die Kupplungselemente (4) eines Paares in einem einteiligen Schwenkteil (4, 5) ausgebildet sind.

9. Differentialgetriebe nach einem der Ansprüche 1 bis 8,
**dadurch gekennzeichnet, daß** das Kupplungselement (4, 5, 20) als Wippe (4, 5, 20) mit zwei gespreizten Schenkeln (8, 9) ausgebildet ist, welche einen Umfangsabschnitt der Abtriebswelle (2, 2') überdecken und an ihren Schenkelenden eine mit der Nockenform korrespondierende Kontaktfläche (18) tragen.

10. Differentialgetriebe nach Anspruch 9,
**dadurch gekennzeichnet, daß** ein zwischen den Wippenschenkeln (8, 9) aufgespannter Wandabschnitt (11) des Kupplungselementes (4, 5, 20) wenigstens an den Enden als schräge oder gebogene Gleitrampe (12) ausgebildet ist.

11. Differentialgetriebe nach einem der Ansprüche 1 bis 10,
**dadurch gekennzeichnet, daß** die Nocken (14) einteilig an den Oberflächen der Abtriebswellen (2, 2') ausgebildet sind.

12. Differentialgetriebe nach einem der Ansprüche 1 bis 6,
**dadurch gekennzeichnet, daß** das Kupplungselement (6) mit seinem freien Ende (24) reibschlüssig mit der Oberfläche der Abtriebswelle (2, 2') zusammenwirkt und von einem an der Antriebshülse (3) abgestützten Federelement (23) radial beaufschlagt wirkt.

13. Differentialgetriebe nach Anspruch 12,
**dadurch gekennzeichnet, daß** die Kupplungselemente (6) in Ausnehmungen (26) am Umfang eines Synchronringes (25) geführt sind, welcher die Wellenzapfen (40, 40') beider Abtriebswellen (2, 2') aufnimmt.

14. Differentialgetriebe nach Anspruch 12 oder 13,
**dadurch gekennzeichnet, daß** eine Vielzahl von Kupplungselementen (6) vorgesehen ist, welche an ihren freien Enden (24) in Umfangsrichtung der Abtriebswelle (2, 2') aneinanderliegen.

## Claims

1. Differential for transmitting a driving torque to coaxially and separately mounted output shafts (2, 2') of a motor vehicle, in particular a ride-on lawn mower, with a drive sleeve (3) disposed concentrically with the output shafts (2, 2') which axially overlaps the mutually facing journals (40, 40') of the output shafts (2, 2'), and with at least one radial coupling element (4, 5, 6, 20) for each output shaft (2, 2') which can be tilted into a force-transmitting position due to a contact with the respective output shaft (2, 2') depending on the direction of rotation (35) of the drive sleeve (3), and the coupling elements (4, 5, 6, 20) of the two output shafts (2, 2') are coupled in pairs in order to effect their tilting movement, **characterised in that** at least one coupling element (4, 5, 6, 20) for each output shaft is pivotably mounted in radial cut-outs (7) of the drive sleeve (3) on both sides of a radial axis (17).

2. Differential as claimed in claim 1,
**characterised in that** the coupling elements (4, 5, 6, 20) of each pair are disposed in an axially overlapping arrangement on either side of a separation plane of the output shafts (2, 2').

3. Differential as claimed in claim 1 or 2,
**characterised in that** several coupling elements (4, 5, 6, 20) are distributed around the circumference of the drive sleeve (3).

4. Differential as claimed in one of claims 1 to 3,
**characterised in that** at least one cam (14) is provided on the output shaft (2, 2') in an axial position of the coupling element (4, 5, 20), which projects out from the shaft (2, 2') by an amount that is smaller than the circumcircle (16) of the part of the coupling element (4, 5, 20) lying behind in the direction of rotation (35) in the tilted position and acts as a driver, co-operating with the part lying at the front.

5. Differential as claimed in claim 4,
**characterised in that** the coupling elements (5, 20) of a pair are connected by means of a centring mechanism (22), advantageously a return spring (22), acting between the pairs.

6. Differential as claimed in one of claims 1 to 5,
**characterised in that** the coupling elements (4, 5, 6, 20) are biased by radial spring elements (23).

7. Differential as claimed in one of claims 4 to 6,
**characterised in that** a cam (14) is formed on the ends of a bolt (13) displaceably extending through the output shaft (2, 2'), which is provided with a stop (15) in order to restrict the movement out of the output shaft (2, 2').

8. Differential as claimed in claim 7,
**characterised in that** the coupling elements (4) of a pair are provided in the form of a one-piece pivoting part (4, 5).

9. Differential as claimed in one of claims 1 to 8,
**characterised in that** the coupling element (4, 5, 20) is provided in the form of a rocker (4, 5, 20) with two splayed legs (8, 9) which overlap a circumferential portion of the output shaft (2, 2') and bear a contact surface (18) matching the cam shape at their leg ends.

10. Differential as claimed in claim 9,
**characterised in that** a wall portion (11) of the coupling element (4, 5, 20) extending between the rocker legs (8, 9) is provided in the form of an oblique or bent slide ramp (12), at least at the ends.

11. Differential as claimed in one of claims 1 to 10,
**characterised in that** the cams (14) are integrally formed on the surfaces of the output shafts (2, 2').

12. Differential as claimed in one of claims 1 to 6,
**characterised in that** the coupling element (6) cooperates with the surface of the output shaft (2, 2') by means of its free end (24) due to friction and acts in a radial direction biased by a spring element (23) supported on the drive sleeve (3).

13. Differential as claimed in claim 12,
**characterised in that** the coupling elements (6) are guided in cut-outs (26) in the circumference of a synchroniser ring (25), which accommodates the journals (40, 40') of the two output shafts (2, 2').

14. Differential as claimed in claim 12 or 13,
**characterised in that** a plurality of coupling elements (6) is provided, which lie one against the other at their free ends (24) in the circumferential direction of the output shaft (2, 2').

## Revendications

1. Engrenage différentiel pour la transmission d'un couple de rotation d'entraînement sur des arbres de sortie (2, 2') disposés coaxialement et séparément d'un véhicule, en particulier d'une tondeuse mobile, comprenant une douille d'entraînement (3) qui est disposée concentriquement aux arbres de sortie (2, 2') et recouvre axialement les tourillons d'arbre (40, 40') des arbres de sortie (2, 2') tournés l'un vers l'autre, et par arbre de sortie (2, 2') au moins un élément de couplage radial (4, 5, 6, 20) qui peut être basculé dans une position de transmission de force, par contact avec l'arbre de sortie (2, 2') respectif selon le sens de rotation (35) de la douille d'entraînement (3),
**caractérisé en ce que** pour chaque arbre de sortie (2, 2') au moins un élément de couplage (4, 5, 6, 20) est logé respectivement dans un évidement radial (7) de la douille d'entraînement (3) de façon pivotante vers les deux côtés d'un axe radial (17), les éléments de couplage (4, 5, 6, 20) des deux arbres de sortie (2, 2') étant couplés par paires concernant le mouvement de basculement.

2. Engrenage différentiel selon la revendication 1,
**caractérisé en ce que** les éléments de couplage (4, 5, 6, 20) de chaque paire sont disposés se chevauchant axialement de part et d'autre d'un plan de séparation des arbres de sortie (2, 2').

3. Engrenage différentiel selon la revendication 1 ou 2,
**caractérisé en ce que** plusieurs éléments de couplage (4, 5, 6, 20) sont répartis sur la périphérie de la douille d'entraînement (3).

4. Engrenage différentiel selon l'une quelconque des revendications 1 à 3,
**caractérisé en ce que** sur l'arbre de sortie (2, 2') au moins une came (14) est prévue dans la position axiale de l'élément de couplage (4, 5, 20), qui dépasse de l'arbre (2, 2') de façon plus faible que le pourtour (16) de la partie de l'élément de couplage (4, 5, 20) située à l'arrière dans le sens de rotation en position basculée et coopère comme élément d'entraînement avec la partie située à l'avant.

5. Engrenage différentiel selon la revendication 4,
**caractérisé en ce que** les éléments de couplage (5, 20) d'une paire sont reliés par un mécanisme de centrage (22), avantageusement un ressort de rappel (22), agissant entre les paires.

6. Engrenage différentiel selon l'une quelconque des revendications 1 à 5,
**caractérisé en ce que** les éléments de couplage (4, 5, 6, 20) sont sollicités par des éléments de ressort radiaux (23).

7. Engrenage différentiel selon l'une quelconque des revendications 4 à 6,
**caractérisé en ce qu'**une came (14) est formée aux extrémités d'un boulon (13) mobile traversant l'arbre de sortie (2, 2'), qui est muni d'une butée (15) pour limiter la sortie hors de l'arbre de sortie (2, 2').

8. Engrenage différentiel selon la revendication 7,
**caractérisé en ce que** les éléments de couplage (4) d'une paire sont formés dans une partie pivotante (4, 5) d'une seule pièce.

9. Engrenage différentiel selon l'une quelconque des revendications 1 à 8,
**caractérisé en ce que** l'élément de couplage (4, 5, 20) présente la forme d'une bascule (4, 5, 20) avec deux branches (8, 9) écartées qui recouvrent une partie de périphérie de l'arbre de sortie (2, 2') et portent sur leurs extrémités de branche une surface de contact (18) correspondant à la forme de la came.

10. Engrenage différentiel selon la revendication 9,
**caractérisé en ce qu'**une partie de paroi (11) de l'élément de couplage (4, 5, 20) située entre les branches de bascule (8, 9) présente aux moins aux extrémités la forme d'une rampe de glissement (12) inclinée ou courbe.

11. Engrenage différentiel selon l'une quelconque des revendications 1 à 10,
**caractérisé en ce que** les cames (14) sont formées d'une seule pièce sur les surfaces des arbres de sortie (2, 2').

12. Engrenage différentiel selon l'une quelconque des revendications 1 à 6,
**caractérisé en ce que** l'élément de couplage (6) coopère par son extrémité libre (24) par complémentarité de friction avec la surface de l'arbre de sortie (2, 2') et est sollicité radialement par un élément de ressort (23) appuyé contre la douille d'entraînement (3).

13. Engrenage différentiel selon la revendication 12,
**caractérisé en ce que** les éléments de couplage (6) sont guidés dans des évidements (26) sur la périphérie d'une bague de synchronisation (25) qui loge les tourillons d'arbre (40, 40') des deux arbres de sortie (2, 2').

14. Engrenage différentiel selon la revendication 12 ou 13,
**caractérisé en ce qu'**une multitude d'éléments de couplage (6) est prévue, qui par leurs extrémités libres (24) sont appliqués les uns contre les autres dans la direction périphérique de l'arbre de sortie (2, 2').
